# EUROPEAN PATENT APPLICATION

(11) **EP 1 761 047 A2**
(43) Date of publication of application: **07.03.2007**
(21) Application number: 06254469.7
(22) Date of filing: 29.08.2006
(51) Int. Cl.: H04N 5/44

(54) **Method of processing a data broadcast application and television receiver using the same**

(30) Priority: 30.08.2005 KR 20050080081
(71) Applicant: LG Electronics Inc., Yongdungpo-gu Seoul (KR)
(72) Inventor: Hong, Young Ho, myeon Chilgok-gun Gyeongsangbuk-do (KR)
(74) Representative: Bryn-Jacobsen, Caelia

(57) **Abstract**

A method of processing a data broadcast application and a television receiver using the same enables a user to execute a data broadcast application, at any time, as desired. The television receiver receives a stream of a data broadcast application and includes a storage medium for storing the received stream; and a controller for determining whether to store in the storage medium a specific data broadcast application of the received stream and for controlling execution of the specific data broadcast application stored in the storage medium. The method includes steps of receiving the stream; determining whether to store a specific data broadcast application semi-permanently; storing, if it is determined to semi-permanently store the specific data broadcast application, the stream in a storage medium enabling semi-permanently storage; and executing the data broadcast application stored in the storage medium according to a user command.

## Description

The present invention relates to digital television receivers. More particularly, but not limited to, the invention relates to a method of processing a data broadcast application in a television receiver and a television receiver using the same.

Along with the transmission of audio and video signals, a digital broadcasting station may also transmit various data streams associated with the audio and video components, according to any one or more of several digital broadcasting standards, such as the multimedia home platform (MHP), open cable application platform (OCAP), or advanced common application platform (ACAP) standards. The MHP standard is a Java-based standard specifying means for exchanging data in a digital television receiver using a descriptive language corresponding to the Internet protocol of a personal computer.

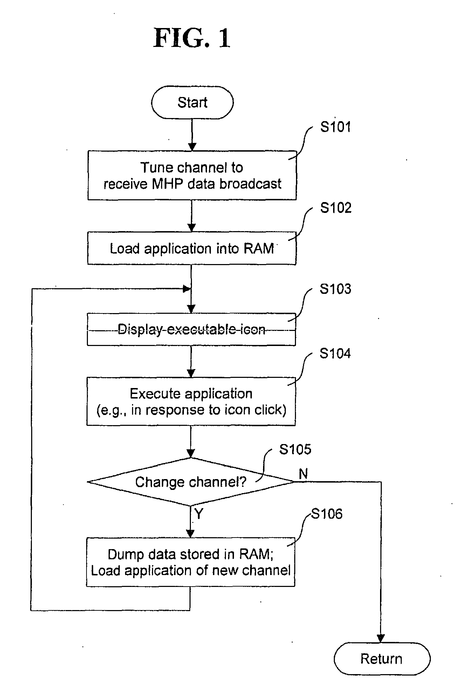

FIG. 1 illustrates an exemplar method of storing and executing a data broadcast application in a television receiver. Here, a contemporary television receiver is controlled to process a data broadcast application by receiving an MHP data broadcast on a first channel, storing (loading) a corresponding application, executing the application according to an icon operation, and responding to a change in the tuned channel carrying another data broadcast application. The data broadcast applications may be associated with, for example, a game, an advertisement, or an image for placing an order via home shopping.

Referring to FIG. 1, the television receiver is first tuned to a channel for receiving a data broadcast, e.g., an MHP data broadcast, including a data broadcast application (5101). The data broadcast application of the first channel is loaded (stored) in a RAM device (i.e., temporary storage means) of the television receiver (S102). With a completion of application loading, an execution of the data broadcast application is enabled, and the television receiver may display an icon indicating whether such execution is available (S103). Thereafter, the data broadcast application may be executed, for example, by clicking on the icon (S104).

Meanwhile, the user may at any time decide to tune the television receiver to another channel (S105). Such tuning may occur before or after executing the data broadcast application, but if performed after application loading, the stored data is dumped (deleted) from RAM to permit the loading of a new data broadcast application received, for example, via another channel (S106). That is, a new application is most likely the result of an instance of changing the tuned channel but may also result in a change occurring on the broadcaster's side.

It should be appreciated that, under normal conditions of using the various applications of an MHP data broadcast, there are frequent changes that occur in transmission, whereby different applications are included in the incoming stream, and whenever a new application occurs, the corresponding execution time suffers. Execution time is delayed since the loading of the correspondingly transmitted application is achieved by a temporary storage (i.e., RAM) so that, to execute a specific data broadcast application, a user must await its reception and ensuing storage. Hence, the user is not free to execute a specific application at a specific timing point.

Moreover, the loading of an MHP data broadcast application is stored in RAM via an object carousel processor. An object carousel system is a bidirectional service transfer system for digital cable broadcasting, i.e., packet data transport, over a network using a digital storage media command and control (DSM-CC) standard. This loading operation is time-consuming and must be completed before executing the corresponding application, thereby inconveniencing the user with further delays.

The present invention is set out in the independent claims. Some optional features are set out in the claims dependent thereto.

According to one aspect there is a method of processing a data broadcast application and a television receiver using the same that substantially obviates one or more problems due to limitations and disadvantages of the prior art.

A further aspect is a method of processing a data broadcast application and a television receiver using the same, which enables a user to execute a data broadcast application, at any time, as desired.

Another aspect is a method of processing a data broadcast application and a television receiver using the same, which reduces an execution time of the data broadcast application.

One aspect is a method of processing a data broadcast application and a television receiver using the same, which increases the flexibility of operating the television receiver by allowing a user to tune from channel to channel more freely, without restricting the execution of corresponding data broadcast applications.

In one aspect, there is provided a television receiver for receiving a stream of a data broadcast application. The television receiver comprises a storage medium for storing the received stream; and a controller for determining whether to store in the storage medium a specific data broadcast application of the received stream and for controlling execution of the specific data broadcast application stored in the storage medium.

In another aspect, there is provided a method of processing a data broadcast application in a television receiver receiving a stream of data broadcast applications, the method comprises receiving the stream; determining whether to store a specific data broadcast application semi-permanently; storing, if it is determined to semi-permanently store the specific data broadcast application, the stream in a storage medium enabling semi-permanently storage; and executing the data broadcast application stored in the storage medium according to a user command.

In another aspect, there is an apparatus for processing a data broadcast application in a television receiver receiving a stream of data broadcast applications, the apparatus including a storage medium for storing the received stream, a controller for determining whether to store a specific data broadcast application semi-permanently, the controller arranged to store, if it is determined to semi-permanently store the specific data broadcast application, the stream in a storage medium enabling semi-permanent storage, and further arranged to execute the data broadcast application stored in the storage medium according to a user command. Therefore, the present invention enables a user to execute a preferred data broadcast application at any time, even if there is a change in a stream of a currently broadcast data broadcast application, for example, due to a change in the tuned channel or a change made by the broadcaster. Moreover, by reducing a loading time in re-executing the corresponding data broadcast application, a user's standby time can be considerably reduced.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention by way of example only and together with the description serve to explain the principle of the invention. In the drawings:

FIG. 1 is a flowchart of an exemplar method of storing and executing a data broadcast application in a television receiver;

FIG. 2 is a block diagram of a television receiver for processing data broadcast applications according to the present invention; and

FIG. 3 is a flowchart of a method of controlling a television receiver for processing data broadcast applications according to the present invention.

Wherever possible, like reference designations will be used throughout the drawings to refer to the same or similar parts.

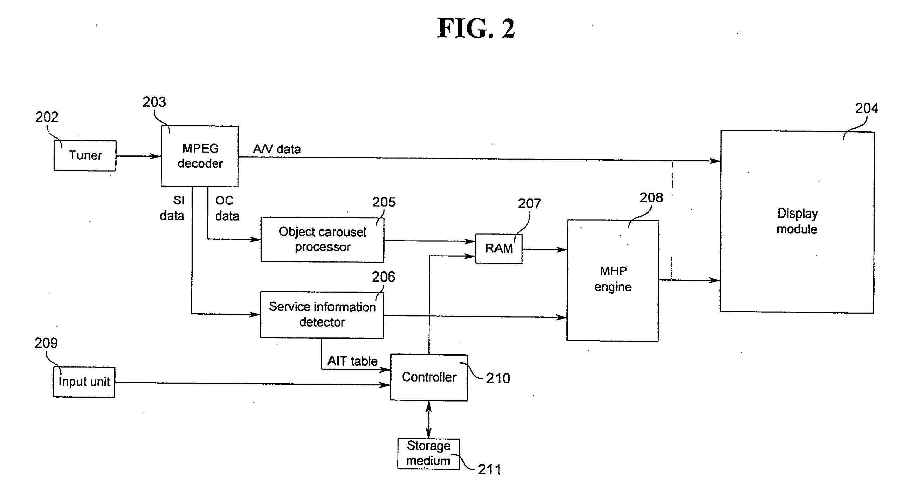

In FIG. 2 a data broadcast application is executed based on data broadcasting according to the MHP standard. Although an MHP data broadcast is described by way of example, it is apparent to those skilled in the art that the present invention is applicable to other data broadcasts and standards. That is, the television receiver according to the present invention is capable of receiving a steam of a data broadcast application, the stream comprising at least one data broadcast application.

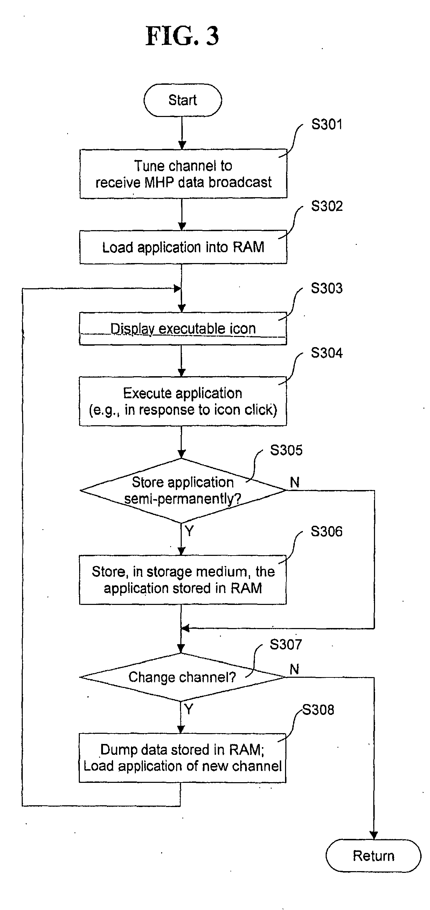

Here, it should be appreciated that a television receiver adopting the present invention may also comprise basic elements for receiving and outputting (e.g., displaying) broadcast signals in a general manner, including elements of a digital television receiver capable of receiving to display a data broadcast via a PDP or LCD display, and that the present invention may also comprise a video apparatus capable of implementing functions of the elements shown in FIG. 3, namely, functions of storing and executing data broadcast applications such as an application included a data broadcast of a game, advertisement, or an image for placing an order via home shopping. The necessary information (e.g., the contents of the game, advertisement, etc.) may be transmitted as part of an Agency for Instructional Technology (AIT) table, which includes information related to a received MHP application and is extracted by a service information detector. The AIT table also includes application type information indicating whether the data broadcast application of the transmission channel is a service-bound application and dependent on a broadcast program or a service-unbound application and independent from a broadcast program.

Referring to FIG. 2, a tuner 202 tunes (receives) a digital broadcast signal having a specific frequency (channel) among a plurality of broadcast signals transmitted from a broadcasting station, thereby outputting a transport stream, and a moving picture experts group (MPEG) decoder 203 parses the transport stream of the tuned channel. In this example, the transmitted signal includes an MHP data broadcast enabling an MHP data broadcast application, and each broadcast program of the received broadcast signal (stream) includes electronic program guide data (EPG) corresponding to tuning data indicating the tuned channel. The MPEG decoder 203 outputs audio and video (A/V) data to a display module 204, outputs object carousel (OC) data for an MHP application to an object carousel processor 205, and outputs service information (SI data) to a service information detector 206 for extracting an MHP application. The service information detector 206 parses the decoded EPG data, according to the tuning data, which is supplied by the service data received from the MPEG decoder 203.

The present invention is primarily concerned with the OC data and SI data, which will enable the MHP application of the data broadcast to be integrated with the corresponding AN data for display via the display module 204. That is, the object carousel processor 205 decodes the MHP application OC data, which is transferred according to an object carousel system and temporarily stored in a random access memory (RAM) 207, and thereby enables an MHP engine 208 to use the decoded OC data retrieved from the RAM. The MHP engine 208 includes a Java virtual machine (JVM), which is loaded to execute the MHP application using display functions of the display module 204, by receiving the MHP application data temporarily stored in the RAM 207 and by displaying the received data. That is, the MHP engine 208 outputs via the display module 204 the data broadcast signal, which includes MHP application data.

According to the present invention, a television receiver configured as above includes an input unit 209, a controller 210, and a storage medium (memory) 211 enabling a permanent or semi-permanent storage of MHP application data using, for example, a personal video recorder or universal serial bus memory. The input unit 209 outputs command signals for controlling the controller 210, including a command signal for executing an MHP application stored in the storage medium 211 and a command signal for controlling storage of MHP application data, i.e., a data broadcast signal. The data broadcast signal is decoded by the object carousel processor 205 to enable use by the MHP engine 208, and the decoded signal is downloaded to the RAM 207. In other words, the data broadcast signal, i.e., MHP application data, is temporarily downloaded to the RAM 207.

At the same time, the controller 210 determines whether the temporarily downloaded data broadcast signal is to be stored in the storage medium 211. That is, a stream of a specific data broadcast application, as received by the television receiver according to the present invention, is stored in the storage medium 211 according to a determination made by the controller 210, which controls the specific data broadcast application stored in the storage medium to be executed. A command signal for controlling the controller 210 and determining whether to store the data broadcast signal as above may be input via the input unit 209. Thus, the controller 210 may store in the storage medium 211 the temporarily stored (RAM-stored) MHP application in response to the user command signal.

Before the MHP application data is output, the controller 210 receives an AIT table from the service information detector 206, to determine the type of MHP application data being downloaded. In doing so, the controller 210 may determine whether the above storage operation is to be performed, that is, whether to the MHP application data in the RAM 207 is to be stored in the storage medium 211. If a command signal for executing the MHP application data stored in the storage medium 211 is input via the input unit 209, the controller 210 extracts the MHP application data stored in the storage medium and controls an output of the extracted MHP application data via the display module 204.

Referring to FIG. 3, illustrating a method of controlling a television receiver for processing a data broadcast application according to the present invention, a channel is first tuned to receive a data broadcast including an MHP data broadcast application (S301). The data broadcast application is loaded in a television receiver, and more specifically, is temporarily stored in the RAM 207 (S302). With a completion of application loading, an execution of the data broadcast application is enabled, and the television receiver may display an icon indicating whether such execution is available (S303). Thereafter, the data broadcast application may be executed, for example, by clicking on the icon (S304).

In the event of application loading, it is determined by the controller 210, or in accordance with a command signal input from the input unit 209, whether to store the application permanently or at least semi-permanently, for example, in a memory such as the storage medium 211 (5305). The decision of the step S305 may be made before or after the application has been executed; that is, an AIT table can be referenced to make a pre-application execution determination of whether to store the application in the storage medium 211.

If it is determined that the application is to be stored in the storage medium 211, the data broadcast application stored in the RAM is stored in the storage medium (S306). In this case, the user may at any time decide to tune the television receiver to another channel (S307), whereby the stored data may freely be dumped from RAM to permit the loading of a new data broadcast application received, for example, via another channel (S308). On the other hand, if it is determined that the application is not to be stored in the storage medium 211, the data broadcast application stored in the RAM is simply discarded in switching to a different channel, so that the steps S307 and S308 may be executed normally.

By adopting the present invention, a user can freely execute both service-unbound (e.g., games) and service-bound (e.g., advertisements) applications without restrictions. That is, a television receiver's operational flexibility can be increased, allowing a user to tune from channel to channel more freely, without restricting the execution of corresponding data broadcast applications. In addition, the present invention reduces a loading time in a re-execution process, thereby reducing overall execution time and enhancing user convenience accordingly.

It will be apparent to those skilled in the art that various modifications can be made in the present invention without departing from the spirit or scope of the invention. Thus, it is intended that the present invention covers such modifications provided they come within the scope of the appended claims and their equivalents.

## Claims

1. A television receiver for receiving a stream of a data broadcast application, the television receiver comprising:
a storage medium for storing the received stream; and
a controller for determining whether to store in said storage medium a specific data broadcast application of the received stream and for controlling execution of the specific data broadcast application stored in said storage medium.

2. The television receiver of claim 1, wherein said storage medium enables a semi-permanent storage of the received stream; and/or wherein the stream comprises at least one data broadcast application; and/or wherein the received stream includes at least one of a service-bound application and a service-unbound application; and/or wherein the stream is broadcast according to a multimedia home platform standard; and/or said storage medium comprising:
at least one of a personal video recorder and a universal serial bus memory.

3. The television receiver of claim 1, further comprising:
an input unit for inputting a command signal for executing a control operation of said controller.

4. The television receiver of claim 3, wherein said controller controls the storage of the specific data broadcast application in said storage medium according to the input command signal; and/or wherein said controller executes the data broadcast application stored in said storage medium according to the input command signal, and/or wherein said controller determines whether to store the specific data broadcast application in said storage medium according to application type information included in an Agency for Instructional Technology (AIT) table extracted from the received stream by a service information detector.

5. The television receiver of claim 1, further comprising:
a tuner for tuning any one of a plurality of channels received by the television receiver, the tuned channel being selected by a user; and preferably wherein the tuned channel carries at least one-of a service-bound application and a service-unbound application.

6. The television receiver of claim 1, further comprising:
a random access memory (RAM) for temporarily storing a data broadcast application of the received stream to enable execution of the data broadcast application,
wherein the specific data broadcast application stored in said storage medium and executed by said controller is also stored in said RAM, and preferably wherein the specific data broadcast application stored in said RAM is deleted from said RAM in response to a change in the data broadcast application of the received stream.

7. A method of processing a data broadcast application in a television receiver receiving a stream of data broadcast applications, the method comprising:
receiving the stream;
determining whether to store a specific data broadcast application semi-permanently;
storing, if it is determined to semi-permanently store the specific data broadcast application, the stream in a storage medium enabling semi-permanently storage; and
executing the data broadcast application stored in the storage medium according to a user command.

8. The method of claim 7, wherein the stream comprises at least one data broadcast application; and/or wherein the received stream includes at least one of a service-unbound application and a service-bound application; and/or wherein the stream is broadcast according to a multimedia home platform standard; and/or wherein the storage medium comprises at least one of a personal video recorder and a universal serial bus memory.

9. The method of claim 7, further comprising:
inputting a command signal for executing the data broadcast application stored in the storage medium; and/or further comprising:
inputting a command signal for controlling the storage of the specific data broadcast application in the storage medium.

10. The method of claim 7, wherein said determining is based on application type information included in an Agency for Instructional Technology (AIT) table extracted from the received stream by a service information detector.

11. The method of claim 7, wherein in said stream receiving is performed by tuning according to a user selection any one of a plurality of channels received by the television receiver, and preferably wherein the tuned channel carries at least one of a service-unbound application and a service-bound application.

12. The method of claim 7, further comprising:
temporarily storing in a random access memory (RAM) a data broadcast application of the received stream to enable execution of the data broadcast application,
wherein the specific data broadcast application stored in the storage medium and executed by the controller is also stored in the RAM; and preferably wherein the specific data broadcast application stored in the RAM is deleted from the RAM in response to a change in the data broadcast application of the received stream.
